# EUROPEAN PATENT APPLICATION

(11) **EP 4 729 890 A1**
(43) Date of publication of application: **22.04.2026**
(21) Application number: 23942142.3
(22) Date of filing: 07.11.2023
(51) Int. Cl.: G01D 1/02

(54) **MAP CORRECTION METHOD AND APPARATUS, DEVICE, AND MEDIUM**

(30) Priority: 19.06.2023 CN 202310733431
(71) Applicant: Zhejiang Sunseeker Industrial Co., Ltd., Jinhua, Zhejiang 321000 (CN)
(72) Inventor: HU, Lang, Jinhua, Zhejiang 321000 (CN)
(74) Representative: Manna, Sara
(86) International application number: PCT/CN2023/130319
(87) International publication number: WO 2024/259875

(57) **Abstract**

The present disclosure discloses a method and apparatus for map correction, a device, and a storage medium. The method includes: acquiring a first point set outside a maximum inner contour and a second point set outside an outer contour in an original map; deleting the first point set and the second point set in the map to acquire an adjusted map; identifying an overlapping point set according to the first point set and the second point set, where the overlapping point set includes overlapping points in the first point set and the second point set; and adding the overlapping point set to the adjusted map to acquire a corrected map. After the original map is acquired, the original map is post-processed, such that the demand on the computing power of an on-board processor is reduced, and the correction efficiency and accuracy of the map are improved.

## Description

The present disclosure claims the priority to Chinese Patent Application No. 2023107334318 filed on June 19, 2023, and entitled "METHOD AND APPARATUS FOR MAP CORRECTION, DEVICE, AND MEDIUM", the content of which is incorporated herein by reference in its entirety.

### TECHNICAL FIELD

The present disclosure relates to the field of automatic control, and in particular, relates to a method for map correction applicable to an autonomous operation device, an apparatus for map correction, a device, and a medium.

### BACKGROUND

Currently, autonomous operation devices travel along an ideal boundary, perform a boundary coordinate recording, and are used in the process of establishing an electronic map. In the actual remote-controlled traveling process, the situation of deviation from the ideal boundary inevitably occurs. In the prior art, the correction is usually performed through a reversing behavior and a related algorithm. Because the correction is performed in real-time, the computing power demand for the autonomous operation device is high, such that the calculation resource and the maintenance cost of the device are increased.

### SUMMARY

The objective of the present disclosure is to provide an improved method and apparatus for map correction, a device, and a storage medium, which solves at least one of the above problems.

According to a first aspect of the present disclosure, the objective is at least partially achieved through a method for map correction. The method includes: acquiring a first point set outside a maximum inner contour and a second point set outside an outer contour in an original map; deleting the first point set and the second point set in the map to acquire an adjusted map; identifying an overlapping point set according to the first point set and the second point set, where the overlapping point set includes overlapping points in the first point set and the second point set; and adding the overlapping point set to the adjusted map to acquire a corrected map. Therefore, the correction method with the above characteristics can reduce the demand on the computing power of an on-board processor and improve the correction efficiency and accuracy of the map by post-processing the original map after acquiring the original map.

According to a second aspect of the present disclosure, the objective is at least partially achieved through an apparatus for map correction. The apparatus includes: a point set acquisition module, configured to acquire a first point set outside a maximum inner contour and a second point set outside an outer contour in an original map; an adjusted map acquisition module, configured to delete the first point set and the second point set in the map to acquire an adjusted map; an overlapping point set identifying module, configured to identify an overlapping point set according to the first point set and the second point set, where the overlapping point set includes overlapping points in the first point set and the second point set; and a corrected map acquisition module, configured to add the overlapping point set to the adjusted map to acquire a corrected map.

According to a third aspect of the present disclosure, the objective is at least partially achieved through a computer device. The computer device includes: at least one processor; and a memory communicatively connected to the at least one processor, where the memory stores a computer program run by the at least one processor, and the computer program, when run by the at least one processor, enables the at least one processor to perform the correction method according to any one of the embodiments of the present disclosure.

According to a fourth aspect of the present disclosure, the objective is at least partially achieved through a computer-readable storage medium. The computer-readable storage medium stores a computer instruction, where the computer instruction, when run by a processor, implements the correction method according to any one of the embodiments of the present disclosure.

The details of at least one embodiment will be set forth in the accompanying drawings and the description below. Other features, objectives, and advantages will be apparent from the description, the accompanying drawings, and the claims.

### BRIEF DESCRIPTION OF THE DRAWINGS

For a clearer illustration of the technical solutions in the embodiments of the present disclosure, the accompanying drawings required to be used in the description of the embodiments are briefly introduced below. It is apparent that the accompanying drawings in the description below are only for some embodiments of the present disclosure, and for those of ordinary skill in the art, other drawings can be obtained according to the accompanying drawings without creative efforts.
FIG. 1 is a flowchart of a method for map correction according to Embodiment I of the present disclosure.
FIG. 2 is a schematic diagram of an original map in a bitmap recording format according to Embodiment I of the present disclosure.
FIG. 3 is a schematic diagram of an original map in a coordinate recording format according to Embodiment I of the present disclosure.
FIG. 4 is a schematic diagram of a maximum inner contour in the original map in a bitmap recording format according to Embodiment I of the present disclosure.
FIG. 5 is a schematic diagram of an outer contour in the original map in a bitmap recording format according to Embodiment I of the present disclosure.
FIG. 6 is a schematic diagram of an adjusted map in a bitmap recording format according to Embodiment I of the present disclosure.
FIG. 7 is a schematic diagram of a corrected map in a bitmap recording format according to Embodiment I of the present disclosure.
FIG. 8 is a schematic diagram of a maximum inner contour in the original map in a coordinate recording format according to Embodiment I of the present disclosure.
FIG. 9 is a schematic diagram of an outer contour in the original map in a coordinate recording format according to Embodiment I of the present disclosure.
FIG. 10 is a schematic diagram of an adjusted map in a coordinate recording format according to Embodiment I of the present disclosure.
FIG. 11 is a schematic diagram of a corrected map in a coordinate recording format according to Embodiment I of the present disclosure.
FIG. 12 is a flowchart of a method for map correction according to Embodiment II of the present disclosure.
FIG. 13 is a schematic structural diagram of an apparatus for map correction according to Embodiment III of the present disclosure.
FIG. 14 is a schematic structural diagram of an electronic device according to Embodiment IV of the present disclosure.

### DETAILED DESCRIPTION

To enable those skilled in the art to better understand the solutions in the present disclosure, the technical solutions in the embodiments of the present disclosure will be clearly and completely described below with reference to the accompanying drawings in the embodiments of the present disclosure, and it is obvious that the described embodiments are only a part of the embodiments of the present disclosure but not all of them. Based on the embodiments of the present disclosure, all other embodiments obtained by those of ordinary skills in the art without creative effort shall fall within the protection scope of the present disclosure.

It should be noted that the terms "first", "second", etc. in the specification and claims of the present disclosure and the above accompanying drawings are used to distinguish similar objects, and do not have to be used to describe a specific order or sequence. It should be understood that the data so used is interchangeable under appropriate circumstances such that the embodiments of the present disclosure described herein are capable of implementation in other sequences than those illustrated or described herein. Moreover, the terms "comprise", "include", "provided with", and any variations thereof are intended to cover a non-exclusive inclusion. For example, a process, method, apparatus, product, or device including a series of steps or units is not necessarily limited to the explicitly listed steps or units, but may include other steps or units that are not explicitly listed or are inherent in the process, method, product or device.

### Embodiment I

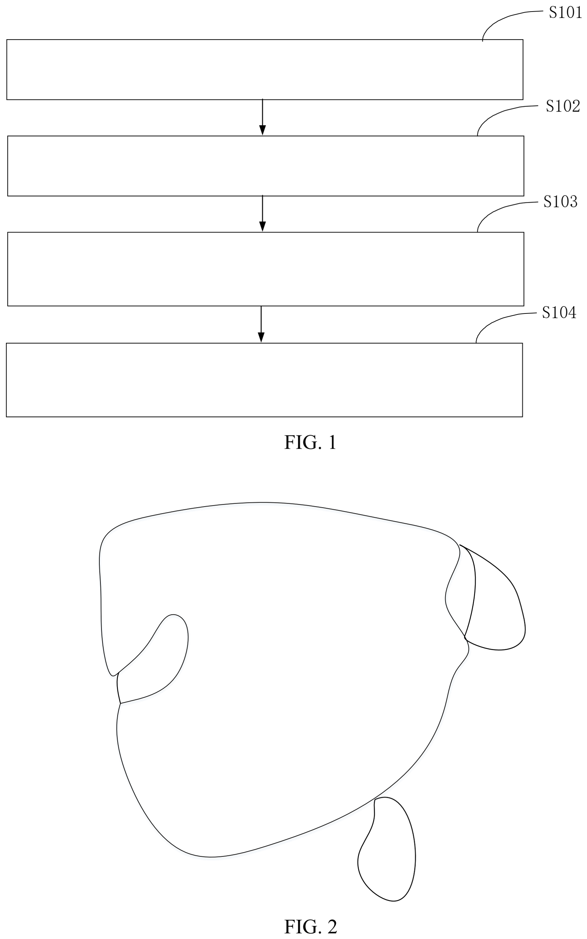

FIG. 1 is a flowchart of a method for map correction according to Embodiment I of the present disclosure. The embodiment is applicable to the case of correcting an original map. The method can be executed by an apparatus for map correction. The apparatus for map correction may be implemented in the form of hardware and/or software, and the apparatus for map correction may be integrated into and configured to an electronic device. As shown in FIG. 1, the method includes:
In step S101, a first point set outside a maximum inner contour and a second point set outside an outer contour in an original map are acquired.

Specifically, the autonomous operation device in the embodiment includes at least a main body mechanism, a movement mechanism, a working mechanism, an energy module, a detection module, an interaction module, and a control module. The main body mechanism typically includes a chassis and a housing. The chassis is configured to install and accommodate functional mechanisms and functional modules, such as the movement mechanism, the working mechanism, the energy module, the detection module, the interaction module, and the control module. The housing is typically configured to at least partially cover the chassis, primarily for enhancing the aesthetics and recognizability of the autonomous operation device. In the embodiment, the housing is configured to translate and/or rotate relative to the chassis under an external force. Combined with a suitable detection module, exemplarily such as a Hall sensor, the housing can further serve to detect events like collisions and lifting. The movement mechanism is configured to support the main body mechanism on the ground and drive the main body mechanism to move on the ground, and generally includes a wheeled movement mechanism, a tracked or semi-tracked movement mechanism, a walking movement mechanism, or the like. In the embodiment, the movement mechanism is a wheeled movement mechanism, which includes at least one driving wheel and at least one walking prime mover. The walking prime mover is preferably a motor, and in other embodiments, the walking prime mover may be an internal combustion engine or a machine that uses other types of energy sources to generate power. In the embodiment, the walking prime mover is preferably configured with a left driving wheel, a left walking prime mover that drives the left driving wheel, a right driving wheel, and a right walking prime mover that drives the right driving wheel. In the embodiment, the straight-line movement of the autonomous operation device is achieved by the equidirectional and constant-speed rotation of the left and right driving wheels, and the steering movement is achieved by the equidirectional and differential-speed rotation or the opposite-direction rotation of the left and right driving wheels. In other embodiments, the movement mechanism further includes a steering mechanism independent of the driving wheels and a steering prime mover independent of the walking prime mover. In the embodiment, the movement mechanism further includes at least one driven wheel, typically configured as a universal wheel. The driving wheel and the driven wheel are located at the front and rear ends of the autonomous operation device, respectively. The working mechanism is configured to perform a specific operation task and includes a working component and a working prime mover driving the working component to operate. Exemplarily, for an intelligent sweeper/vacuum cleaner, the working component includes a roller brush, a dust suction pipe, a dust collection chamber, and the like; for an intelligent lawn mower, the working component includes a cutting blade or a cutting disc, and further includes other components for optimizing or adjusting the mowing effect, such as a height adjustment mechanism for adjusting the mowing height. The working prime mover is preferably a motor, and in other embodiments, the working prime mover may be an internal combustion engine or a machine that uses other types of energy sources to generate power. In some other embodiments, the working prime mover and the walking prime mover are configured as the same prime mover.

In addition, the energy module is configured to provide energy for various operations of the autonomous operation device. In the embodiment, the energy module includes a battery and a charging connection structure. The battery is preferably a rechargeable battery, and the charging connection structure is preferably a charging electrode that can be exposed to the exterior of the autonomous operation device. The detection module is configured as at least one sensor that senses the environmental parameter of the autonomous operation device or its own working parameter. Typically, the detection module may include sensors related to the definition of the working area, such as magnetic induction, collision, ultrasonic, infrared, radio, and various types. The types of sensors are adapted to the position and number of the corresponding signal-generating apparatuses. The detection module may further include sensors related to positioning and navigation, such as a GPS positioning apparatus, a laser positioning apparatus, an electronic compass, or a geomagnetic sensor. The detection module may further include sensors related to its own working safety, such as an obstacle sensor, a lift sensor, or a battery pack temperature sensor. The detection module may further include sensors related to the external environment, such as an ambient temperature sensor, an ambient humidity sensor, an acceleration sensor, or a light sensor. The interaction module is configured at least to receive control instruction information inputted by a user, transmit information requiring user perception, and communicate with other systems or devices to transmit and receive information. In the embodiment, the interaction module includes an input apparatus arranged on the autonomous operation device for receiving control instruction information inputted by a user, typically such as a control panel and an emergency stop key. The interaction module further includes a display screen and/or a buzzer arranged on the autonomous operation device, enabling a user to perceive information through light and/or sound. In other embodiments, the interaction module further includes a communication module arranged on the autonomous operation device and a terminal device independent from the autonomous operation device, such as a mobile phone, a computer, or a network server. User control instruction information or other information may be inputted on the terminal device and reach the autonomous operation device via a wired or wireless communication module. The control module typically includes at least one processor and at least one non-volatile memory. The memory stores a pre-written computer program or an instruction set, and the processor, according to the computer program or the instruction set, controls the performance of movements, operation, or the like of the autonomous operation device. Further, the control module can also control and adjust the corresponding actions of the autonomous operation device and modify data in the memory according to a signal of the detection module and/or a user control instruction.

Optionally, prior to acquiring the first point set outside the maximum inner contour and the second point set outside the outer contour in the original map, the method further includes: determining an ideal boundary, the ideal boundary being a closed path in a specified format, where the specified format includes bitmap recording or coordinate recording; walking forward along the ideal boundary, and returning to the ideal boundary in a turning manner when a deviation from the ideal boundary is identified; and using the curve formed by the whole walking process as the original map when returning to the starting point of the ideal boundary.

Optionally, returning to the ideal boundary in the turning manner when the deviation from the ideal boundary is identified includes: identifying a deviation target point when the deviation from the ideal boundary is identified; and walking, by adopting a specified walking mode, to the deviation target point or a position point on the ideal boundary located before the deviation target point in a turning manner, thereby returning to the ideal boundary, where the specified walking mode includes advancing while turning, which is easier to be remotely controlled and avoids damaging the lawn by reversing or turning in place.

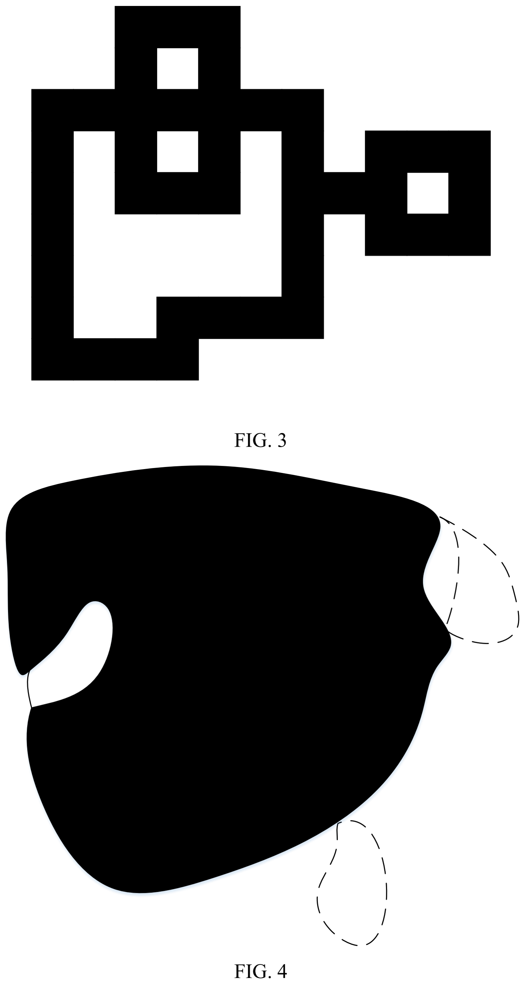

In the embodiment, the autonomous operation device may be a robotic mower, such that the robotic mower, when receiving a control instruction, walks along the closed path in a specified format, i.e., the ideal boundary. It is inevitable that the remote control will cause the robotic mower to go beyond the boundary during the walking process, and when it is determined that it is out of the boundary, control instructions will continue to be received to return to the previous normal trajectory, therefore, when returning to the starting point of the ideal boundary, a curve formed by the whole walking process is used as an original map. Typically, in such cases, various scenarios of path closure will occur. As shown in FIG. 2, a schematic diagram of an original map in a bitmap recording format is shown, and FIG. 3 shows a schematic diagram of an original map in a coordinate recording format. Apparently, the embodiment is only an example and does not limit the specific display format of the original map.

It should be noted that the ideal boundary in the embodiment is used to limit the working area of the autonomous operation device. In some embodiments, the boundary may be solid, typically a wall, a fence, a railing, or the like. In some embodiments, the boundary may also be virtual. Typically, a virtual boundary signal is emitted by a boundary signal-generating apparatus. The virtual boundary signal is typically, for example, an electromagnetic signal emitted by a closed conducting wire, or an optical signal and an ultrasonic signal emitted by other devices. In the embodiment according to the present disclosure, the autonomous operation device is configured to include a positioning apparatus, in particular an RTK positioning apparatus. The virtual boundary is a virtual boundary set in an electronic map formed by two-dimensional or three-dimensional coordinates. In some embodiments, the autonomous operation device is further configured to include a visual simultaneous localization and mapping (VSLAM) apparatus to construct the virtual boundary. A docking station is generally constructed on or near the boundary for the autonomous operation device to dock, particularly to supply energy to the autonomous operation device docked at the docking station. Therefore, when being controlled to walk along the ideal boundary to record the trajectory, if the robot walks out of the ideal boundary, it needs to be controlled to return to the recorded ideal boundary in a walking mode of advancing while turning. More specifically, the robot should return to the deviation target point corresponding to the initial deviation moment or the position point before the deviation target point, so as to ensure that an intersection point exists between the deviated path and the ideal boundary, such that the subsequent processing can be completed. Moreover, the walking mode of advancing while turning can be controlled more easily and avoid damaging the lawn by reversing or turning in place.

Optionally, acquiring the first point set outside the maximum inner contour and the second point set outside the outer contour in the original map includes: identifying the maximum inner contour in the original map, and reserving a first path curve segment outside the maximum inner contour; forming the first point set with the points covered in the first path curve segment; identifying the outer contour in the original map, and reserving a second path curve segment outside the outer contour; and forming the second point set with the points covered in the second path curve segment.

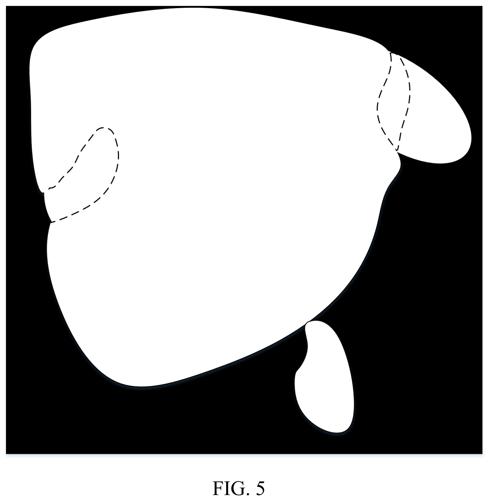

Specifically, in the embodiment, the correction of the original map in a bitmap recording format shown in FIG. 2 can be exemplified. Since the original map in a bitmap format can distinguish different areas using a binarization form, the maximum inner contour in the original map shown in FIG. 2 can be identified, and points within the maximum inner contour are marked, for example, by shading them black. FIG. 4 is a schematic diagram of a maximum inner contour in the original map in a bitmap recording format. The first path curve segment outside the maximum inner contour is reserved, as indicated by the dashed line segments in FIG. 4, and the points covered in the first path curve segment form the first point set. In addition, the outer contour in the original map shown in FIG. 2 can also be identified, and the points outside the outer contour are marked, for example, by shading them black. FIG. 5 is a schematic diagram of an outer contour in the original map in a bitmap recording format. The second path curve segment outside the outer contour is reserved, as indicated by the dashed line segments in FIG. 5, and the points covered in the second path curve segment form the second point set.

In step S102, the first point set and the second point set in the original map are deleted to acquire an adjusted map.

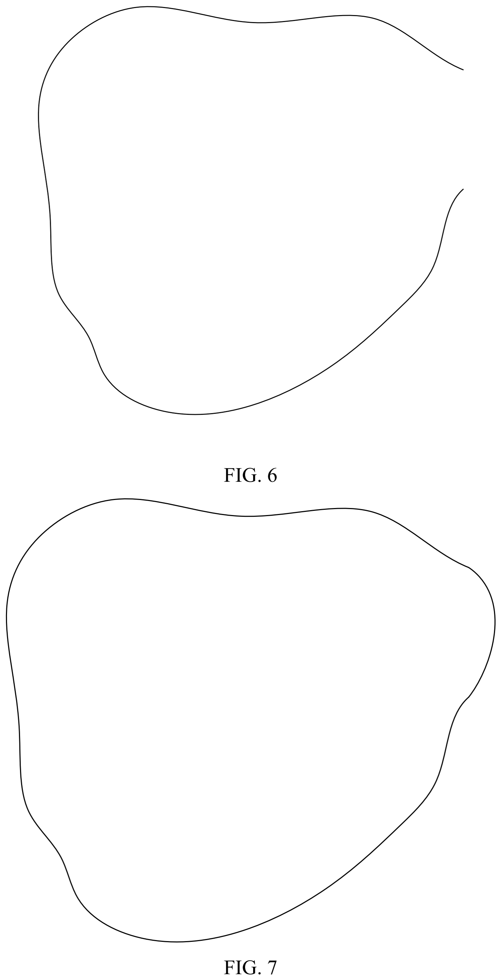

Specifically, in the embodiment, after acquiring the first point set corresponding to the area that is outside the maximum inner contour and represented by the dashed line segments in FIG. 4 and the second point set corresponding to the area that is outside the outer contour and represented by the dashed line segments in FIG. 5, the first point set and the second point set corresponding to the two types of dashed line segments are deleted from the original map shown in FIG. 2, so as to acquire the schematic diagram of the adjusted map in a bitmap recording format shown in FIG. 6.

In step S103, an overlapping point set is identified according to the first point set and the second point set.

Optionally, identifying the overlapping point set according to the first point set and the second point set includes: identifying the position information of each point in the first point set and the position information of each point in the second point set; acquiring target points with the same position information in the first point set and the second point set; and using the target points as the overlapping points in the first point set and the second point set, and forming the overlapping point set according to the overlapping points.

Specifically, in the embodiment, the overlapping point set includes overlapping points in the first point set and the second point set. Identifying the overlapping points in the two point sets, specifically involves identifying the position information of each point in the first point set and the position information of each point in the second point set, and taking the points with the same position information in the two point sets as the overlapping points. For example, in FIGS. 4 and 5, there is a portion of dashed line segments in the upper right corner that share the same location, and the portion of the dashed line segments corresponds to the acquired overlapping point set. Apparently, the embodiment is only an example and does not limit the specific size of the overlapping point set and the position of each overlapping point in the overlapping point set. In step S104, the overlapping point set is added to the adjusted map to acquire a corrected map.

Optionally, adding the overlapping point set to the adjusted map to acquire the corrected map includes: adding the overlapping point set to the adjusted map to acquire a filled map; and correcting according to the filled map to acquire the corrected map.

Optionally, correcting according to the filled map to acquire the corrected map includes: when an interruption position is identified in the filled map, joining the adjacent path curves at the interruption position to acquire a joined map; and smoothing the joined map to acquire the corrected map.

Specifically, in the embodiment, after the adjusted map is acquired, since a large gap exists in the adjusted map at this point and the line segment corresponding to the overlapping point set completely or partially corresponds to the gap, the overlapping point set can be added to the adjusted map to acquire the filled map. When the overlapping point set completely corresponds to the gap, the overlapping point set is added to the adjusted map to acquire the filled map, and the filled map is smoothed to acquire the corrected map in a bitmap recording format as shown in FIG. 7. However, when the line segment corresponding to the overlapping point set only partially corresponds to the gap, it is necessary to identify the interruption position in the filled map and join the adjacent path curves at the interruption position to acquire the joined map, which is a closed curve at this point. Subsequently, the above-mentioned smoothing process is continued for the joined map to acquire the corrected map.

It should be noted that in actual path maps, there is generally no particularly sharp corner. Therefore, when a sharp corner is identified in the joined map, it is necessary to perform a smoothing process and remove the sharp corner to ensure the smoothness of the acquired corrected map.

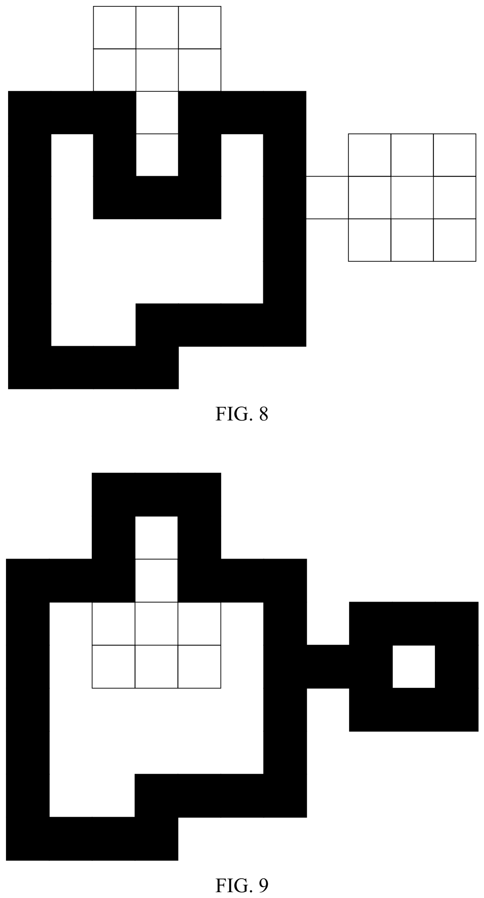

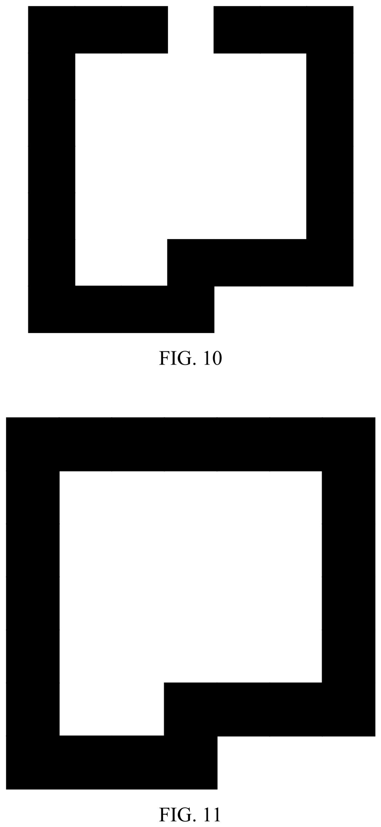

It should be noted that the above embodiment exemplifies a process of correcting the original map in a bitmap recording format. Apparently, an original map in a coordinate recording format may also be corrected. For example, FIG. 8 shows a schematic diagram of a maximum inner contour in an original map in a coordinate recording format, as indicated by the black border portion in FIG. 8; FIG. 9 shows a schematic diagram of an outer contour in the original map in a coordinate recording format, as indicated by the black border portion in FIG. 9. A first point set outside the maximum inner contour and a second point set outside the outer contour are identified; the first point set and the second point set in the original map are deleted to acquire the schematic diagram of an adjusted map in a coordinate recording format as shown in FIG. 10; the overlapping points in the first point set and the second point set form an overlapping point set; and the overlapping point set is added to the adjusted map to acquire the schematic diagram of a corrected map in a coordinate recording format as shown in FIG. 11. Since the principles in the method for correcting an original map in a coordinate recording format are substantially the same as those in the method for correcting an original map in a bitmap recording format, the details will not be further described in the embodiment.

According to the embodiment of the present disclosure, after the original map is acquired, the original map is post-processed, such that the demand on the computing power of an on-board processor is reduced, and the correction efficiency and accuracy of the map are improved.

### Embodiment II

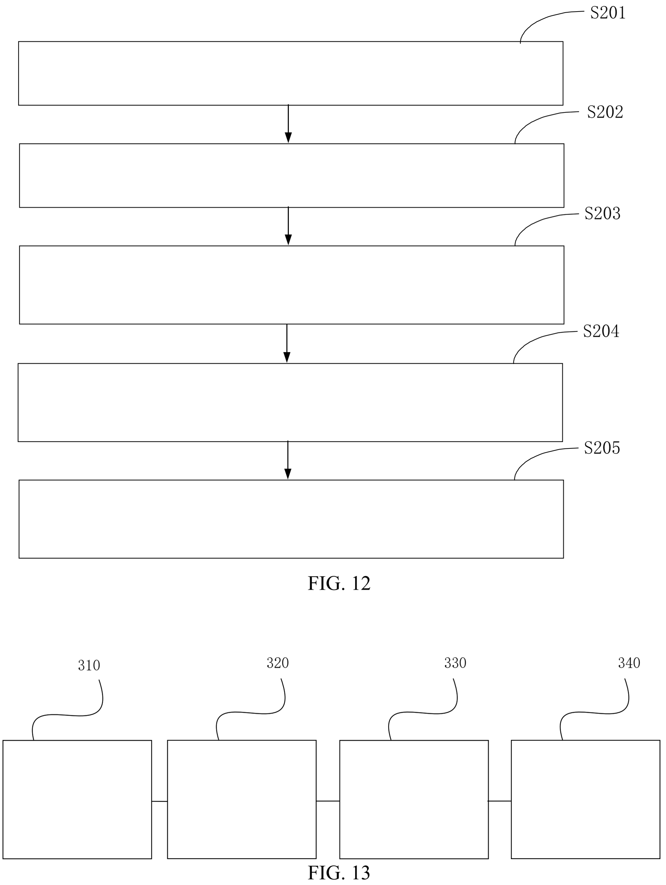

FIG. 12 is a flowchart of a method for map correction according to Embodiment II of the present disclosure. Based on the above embodiment, after the overlapping point set is added to the adjusted map to acquire the corrected map, the method further includes: receiving an operation start instruction, and performing the operation within the range of the corrected map according to the operation start instruction. As shown in FIG. 12, the method includes:
In step S201, a first point set outside a maximum inner contour and a second point set outside an outer contour in an original map are acquired.

Optionally, prior to acquiring the first point set outside the maximum inner contour and the second point set outside the outer contour in the original map, the method further includes: determining an ideal boundary, the ideal boundary being a closed path in a specified format, where the specified format includes bitmap recording or coordinate recording; walking forward along the ideal boundary, and returning to the ideal boundary in a turning manner when a deviation from the ideal boundary is identified; and using the curve formed by the whole walking process as the original map when returning to the starting point of the ideal boundary.

Optionally, acquiring the first point set outside the maximum inner contour and the second point set outside the outer contour in the original map includes: identifying the maximum inner contour in the original map, and reserving a first path curve segment outside the maximum inner contour; forming the first point set with the points covered in the first path curve segment; identifying the outer contour in the original map, and reserving a second path curve segment outside the outer contour; and forming the second point set with the points covered in the second path curve segment.

In step S202, the first point set and the second point set in the original map are deleted to acquire an adjusted map.

In step S203, an overlapping point set is identified according to the first point set and the second point set.

Optionally, identifying the overlapping point set according to the first point set and the second point set includes: identifying the position information of each point in the first point set and the position information of each point in the second point set; acquiring target points with the same position information in the first point set and the second point set; and using the target points as the overlapping points in the first point set and the second point set, and forming the overlapping point set according to the overlapping points.

In step S204, the overlapping point set is added to the adjusted map to acquire a corrected map.

Optionally, adding the overlapping point set to the adjusted map to acquire the corrected map includes: adding the overlapping point set to the adjusted map to acquire a filled map; and correcting according to the filled map to acquire the corrected map.

Optionally, correcting according to the filled map to acquire the corrected map includes: when an interruption position is identified in the filled map, joining the adjacent path curves at the interruption position to acquire a joined map; and smoothing the joined map to acquire the corrected map.

In step S205, an operation start instruction is received, and an operation is performed within the range of the corrected map according to the operation start instruction.

Specifically, in the embodiment, the purpose of acquiring the corrected map is to facilitate the subsequent mowing operations of the robotic mower. Therefore, after correcting the original map to acquire the corrected map, once the operation start instruction is determined to be received, the robotic mower can perform the mowing operation within the range of the corrected map according to the operation start instruction, without exceeding the range limited by the corrected map, such that the mowing range of the robotic mower is limited by the corrected map and thus the robotic mower is ensured to perform the mowing operation in a specified area.

It should be noted that when the robotic mower performs the mowing operation within the range of the corrected map, the mowing operation can be performed sequentially from outside to inside, or be performed repeatedly in a sequence from left to right. In the embodiment, the specific working mode of the robotic mower within the range of the correction operation is not limited. Moreover, the mowing work is determined to be completed when it is determined that the entire area within the corrected map has been traversed. At this point, a mowing operation completion signal is sent to prompt a user to stop the operation of the robotic mower in the current corrected map, so as to save the energy of the robotic mower.

According to the embodiment of the present disclosure, after the original map is acquired, the original map is post-processed, such that the demand on the computing power of an on-board processor is reduced, and the correction efficiency and accuracy of the map are improved. When the operation start instruction is received, the operation is performed within the range of the corrected map according to the operation start instruction, such that the robotic mower is ensured to perform a mowing operation within the specified range, and the normal performance of the mowing work is ensured.

### Embodiment III

FIG. 13 is a schematic structural diagram of an apparatus for map correction according to Embodiment III of the present disclosure. As shown in FIG. 13, the apparatus includes: a point set acquisition module 310, an adjusted map acquisition module 320, an overlapping point set identifying module 330, and a corrected map acquisition module 340.

The point set acquisition module 310 is configured to acquire a first point set outside a maximum inner contour and a second point set outside an outer contour in an original map.

The adjusted map acquisition module 320 is configured to acquire an adjusted map by deleting the first point set and the second point set on the original map.

The overlapping point set identifying module 330 is configured to identify an overlapping point set according to the first point set and the second point set, where the overlapping point set includes overlapping points in the first point set and the second point set.

The corrected map acquisition module 340 is configured to add the overlapping point set to the adjusted map to acquire a corrected map.

Optionally, the apparatus further includes an original map acquisition module. The original map acquisition module is configured to: identify an ideal boundary, which is a closed path in a specified format, where the specified format includes bitmap recording or coordinate recording;
walk forward along the ideal boundary, and return to the ideal boundary in a turning manner when a deviation from the ideal boundary is identified; and
use the curve formed by the whole walking process as the original map when returning to a starting point of the ideal boundary.

Optionally, the point set acquisition module is configured to: identify a maximum inner contour in the original map, and reserve a first path curve segment outside the maximum inner contour;
form a first point set with points covered in the first path curve segment;
identify an outer contour in the original map, and reserve a second path curve segment outside the outer contour; and
form a second point set with points covered in the second path curve segment.

Optionally, the overlapping point set identifying module is configured to: identify the position information of each point in the first point set and the position information of each point in the second point set;
acquire target points with the same position information in the first point set and the second point set; and
use the target points as overlapping points in the first point set and the second point set, and form the overlapping point set according to the overlapping points.

Optionally, the corrected map acquisition module includes:
a filled map acquisition unit, configured to add an overlapping point set to an adjusted map to acquire a filled map; and
a corrected map acquisition unit, configured to correct according to the filled map to acquire a corrected map.

Optionally, the corrected map acquisition unit is configured to: join adjacent path curves at an interruption position to acquire a joined map when the interruption position is identified in the filled map; and
smooth the joined map to acquire a corrected map.

Optionally, the apparatus further includes an operation execution module, configured to: receive an operation start instruction; and
perform an operation within a range of the corrected map according to the operation start instruction.

The apparatus for map correction according to the embodiment of the present disclosure can perform the method for map correction according to any one of the embodiments of the present disclosure, and has corresponding functional modules and beneficial effects of performing the method.

### Embodiment IV

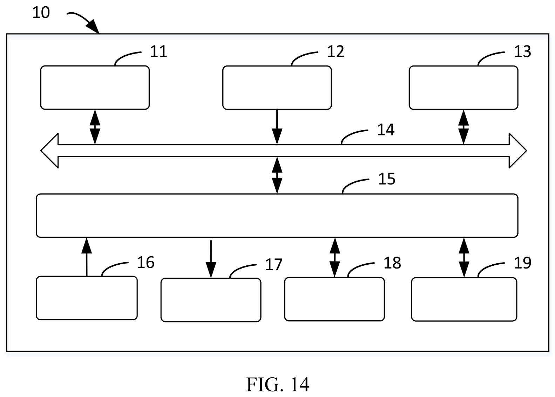

FIG. 14 shows a schematic structural diagram of an electronic device 10 which may be used to implement the embodiments of the present disclosure. The electronic device is intended to represent various forms of digital computers, such as a laptop, a desktop, a workstation, a personal digital assistant, a server, a blade server, a mainframe, and other appropriate computers. The electronic device may also represent various forms of mobile apparatuses. The components shown herein, their connections and relationships, and their functions are merely exemplary and are not intended to limit the implementations of the present disclosure described and/or claimed herein.

The components shown herein, their connections and relationships, and their functions are merely exemplary and are not intended to limit the implementations of the present disclosure described and/or claimed herein.

As shown in FIG. 14, the electronic device 10 includes at least one processor 11 and a memory communicatively connected to the at least one processor 11, such as a read-only memory (ROM) 12, or a random access memory (RAM) 13. The memory stores a computer program that can be run by the at least one processor. The processor 11 can perform various appropriate actions and processes based on the computer program stored in the read-only memory (ROM) 12 or the computer program loaded from a storage unit 18 into the random access memory (RAM) 13. In the RAM 13, various programs and data necessary for the operation of the electronic device 10 may also be stored. The processor 11, the ROM 12, and the RAM 13 are connected to each other via a bus 14. An input/output (I/O) interface 15 is also connected to the bus 14.

A plurality of components in the electronic device 10 are connected to the I/O interface 15, including: an input unit 16, such as a keyboard or a mouse; an output unit 17, such as various types of displays or speakers; a storage unit 18, such as a magnetic disk or an optical disk; and a communication unit 19, such as a network card, a modem, or a wireless communication transceiver. The communication unit 19 allows the electronic device 10 to exchange information/data with other devices through a computer network such as the Internet and/or various telecommunication networks.

The processor 11 may be various general-purpose and/or dedicated processing components having processing and computing capabilities. Some examples of the processor 11 include, but are not limited to, a central processing unit (CPU), a graphics processing unit (GPU), various dedicated artificial intelligence (AI) computing chips, various processors running machine learning model algorithms, a digital signal processor (DSP), and any suitable processor, controller, or microcontroller. The processor 11 performs the various methods and processes described above, such as the method for map correction.

In some embodiments, the method for map correction may be implemented as a computer program, which is tangibly embodied in a computer-readable storage medium, such as the storage unit 18. In some embodiments, part or all of the computer program can be loaded and/or installed onto the device 10 via the ROM 12 and/or the communication unit 19. When the computer program is loaded into the RAM 13 and run by the processor 11, one or more steps of the method for map correction described above can be performed. Alternatively, in other embodiments, the processor 11 may be configured to perform the method for map correction by any other suitable means (e.g., by means of firmware).

The various embodiments of the apparatus and techniques described above herein may be implemented in a digital electronic circuit apparatus, an integrated circuit apparatus, a field programmable gate array (FPGA), an application specific integrated circuit (ASIC), an application specific standard products (ASSP), a system on chip (SOC), a complex programmable logic device (CPLD), computer hardware, firmware, software, and/or combinations thereof. These various embodiments may include: implementation in one or more computer programs, which can be run and/or interpreted on a programmable apparatus including at least one programmable processor. The programmable processor may be of special or general purpose and capable of receiving data and instructions from, as well as transmitting data and instructions to, a storage apparatus, at least one input apparatus, and at least one output apparatus.

The computer programs for implementing the method of the present disclosure may be written in any combination of one or more programming languages. The computer programs may be provided to the processor of a general-purpose computer, a special-purpose computer, or other programmable correction apparatuses, such that the computer programs, when run by the processor, enable the implementation of the functions/operations specified in the flowcharts and/or block diagrams. The computer programs can be run entirely on the machine, partially on the machine, as a stand-alone software package partially on the machine and partially on a remote machine, or entirely on a remote machine or server.

In the context of the present disclosure, a computer-readable storage medium may be a tangible medium, which may contain or store computer programs for use by, or in conjunction with, an instruction execution apparatus, an apparatus, or a device. A computer-readable storage medium may include, but is not limited to, an electronic, magnetic, optical, electromagnetic, infrared, or semiconductor apparatus or device, or any suitable combination thereof. Alternatively, the computer-readable storage medium may be a machine-readable signal medium. More specific examples of a machine-readable storage medium would include an electrical connection based on one or more wires, a portable computer disk, a hard disk, a RAM, a ROM, an erasable programmable read-only memory (EPROM or flash memory), an optical fiber, a portable compact disc read-only memory (CD-ROM), an optical storage device, a magnetic storage device, or any suitable combination thereof.

To provide user interaction, the apparatus and techniques described herein may be implemented on a device. The device includes: a display apparatus (e.g., a touch screen) for displaying information to a user; and a key. A user may provide input to the device by the touch screen or the key. Other types of apparatuses may further be used to provide user interaction; for example, feedback provided to the user may be any form of sensory feedback (e.g., visual feedback, auditory feedback, or tactile feedback); and input from the user may be received in any form (including acoustic, speech, or tactile input).

It should be understood that the various forms of processes shown above may be reordered, augmented, or reduced in steps. For example, various steps described in the present disclosure may be performed in parallel, sequentially, or in different orders, which is not limited herein as long as the desired results of the technical solutions of the present disclosure can be achieved.

The above specific embodiments do not limit the protection scope of the present disclosure. It should be understood by those skilled in the art that various modifications, combinations, sub-combinations, and substitutions may be made according to design requirements and other factors. Any modification, equivalent replacement, or improvement made within the spirit and principle of the present disclosure should be included in the protection scope of the present disclosure.

## Claims

1. A method for map correction, applicable to an autonomous operation device, comprising:
acquiring a first point set outside a maximum inner contour and a second point set outside an outer contour in an original map;
deleting the first point set and the second point set in the original map to acquire an adjusted map;
identifying an overlapping point set according to the first point set and the second point set, wherein the overlapping point set comprises overlapping points in the first point set and the second point set; and
adding the overlapping point set to the adjusted map to acquire a corrected map.

2. The method according to claim 0, wherein prior to acquiring the first point set outside the maximum inner contour and the second point set outside the outer contour in the original map, the method further comprises:
identifying an ideal boundary, the ideal boundary being a closed path in a specified format, wherein the specified format comprises bitmap recording or coordinate recording;
walking forward along the ideal boundary, and returning to the ideal boundary in a turning manner when a deviation from the ideal boundary is identified; and
using a curve formed by a whole walking process as the original map when returning to a starting point of the ideal boundary.

3. The method according to claim 0, wherein returning to the ideal boundary in the turning manner when the deviation from the ideal boundary is identified comprises:
identifying a deviation target point when the deviation from the ideal boundary is identified; and
walking, by adopting a specified walking mode, to the deviation target point or a position point on the ideal boundary located before the deviation target point in a turning manner, thereby returning to the ideal boundary, wherein the specified walking mode comprises advancing while turning.

4. The method according to claim 0, wherein acquiring the first point set outside the maximum inner contour and the second point set outside the outer contour in the original map comprises:
identifying the maximum inner contour in the original map and reserving a first path curve segment outside the maximum inner contour;
forming the first point set with points covered in the first path curve segment;
identifying the outer contour in the original map, and reserving a second path curve segment outside the outer contour; and
forming the second point set with points covered in the second path curve segment.

5. The method according to claim 0, wherein identifying the overlapping point set according to the first point set and the second point set comprises:
identifying position information of each point in the first point set and position information of each point in the second point set;
acquiring target points with same position information in the first point set and the second point set; and
using the target points as the overlapping points in the first point set and the second point set, and forming the overlapping point set according to the overlapping points.

6. The method according to claim 0, wherein adding the overlapping point set to the adjusted map to acquire the corrected map comprises:
adding the overlapping point set to the adjusted map to acquire a filled map; and
correcting according to the filled map to acquire the corrected map.

7. The method according to claim 0, wherein correcting according to the filled map to acquire the corrected map comprises:
joining adjacent path curves at an interruption position to acquire a joined map when the interruption position is identified in the filled map; and
smoothing the joined map to acquire the corrected map.

8. The method according to claim 0, wherein after adding the overlapping point set to the adjusted map to acquire the corrected map, the method further comprises:
receiving an operation start instruction; and
performing an operation within a range of the corrected map according to the operation start instruction.

9. An apparatus for map correction, comprising:
a point set acquisition module, configured to acquire a first point set outside a maximum inner contour and a second point set outside an outer contour in an original map;
an adjusted map acquisition module, configured to delete the first point set and the second point set in the original map to acquire an adjusted map;
an overlapping point set identifying module, configured to identify an overlapping point set according to the first point set and the second point set, wherein the overlapping point set comprises overlapping points in the first point set and the second point set; and
a corrected map acquisition module, configured to add the overlapping point set to the adjusted map to acquire a corrected map.

10. A computer device, comprising a memory, a processor, and a computer program stored on the memory and run on the processor, wherein the processor, when running the program, implements the method according to any one of claims 0 to 0.

11. A storage medium for computer-executable instructions with a computer program stored thereon, wherein the program, when run by a processor, implements the method according to any one of claims 0 to 0.
